Europäisches Patentamt

(19) European Patent Office

Office européen des brevets

(11) Publication number: **0 105 310**
**B1**

(12) **EUROPEAN PATENT SPECIFICATION**

(45) Date of publication of patent specification: **15.04.87**

(21) Application number: **83901244.0**

(22) Date of filing: **28.03.83**

(86) International application number:
**PCT/SE83/00115**

(87) International publication number:
**WO 83/03591 27.10.83 Gazette 83/25**

(51) Int. Cl.⁴: **B 65 G 7/04, B 62 D 61/12**

(54) **TOWING VEHICLE.**

(30) Priority: **07.04.82 SE 8202215**

(43) Date of publication of application:
**18.04.84 Bulletin 84/16**

(45) Publication of the grant of the patent:
**15.04.87 Bulletin 87/16**

(84) Designated Contracting States:
**BE DE FR GB NL SE**

(56) References cited:
**DK-A- 119 542**
**SE-B- 357 721**
**SE-B- 412 571**
**SE-C- 148 620**
**US-A-2 936 037**

(73) Proprietor: **SVENSKA**
**UTVECKLINGSAKTIEBOLAGET**
**Hamngatan 6**
**S-111 47 Stockholm (SE)**

(72) Inventor: **FRÖROTH, Ake**
**Strandvägen 43**
**S-114 56 Stockholm (SE)**

(74) Representative: **Delhage, Einar et al**
**Bergenstrahle & Lindvall AB Sankt Paulsgatan 1**
**S-116 47 Stockholm (SE)**

Courier Press, Leamington Spa, England.

## Description

The present invention relates to a towing vehicle with a front axle and a rear axle, the wheels of the latter being steerable and drivably connected to the driving means, a coupling means carried by the vehicle frame and implemented to provide a substantially rigid interconnection of the vehicle frame and an object to be towed, and a lifting means adapted to allow lifting the front wheels from the substructure when the coupling means is in engagement with said object.

Towing vehicles of this kind are intended, inter alia, for moving containers, trailers etc. in terminus areas. The principles for the type of container handling intended here are well known and appear from e.g. SE—B—412 571. The occurrence of ramps having different slopes and configurations causes special problems in this container handling.

In the vehicle according to SE—AB—412 571 the lifting means for lifting the front wheels from the substructure act between the rear axle and the main frame of the vehicle. There are no independent means for setting the level of the coupling means used to interconnect the vehicle frame and the object to be towed. Due to the particular design of this towing vehicle the level of the front wheels over the substructure need to be great enough to cope with all kinds of shapes of the substructure. This, however, means that the distance between the front wheels and the substructure usually has to be so great that it causes problems in connection with emergency braking. Thus, the towing vehicle, when transporting an empty and therefore comparatively light container down a ramp, will tip forward so that the front wheels impact against the substructure during emergency braking. Should this happen there also occurs a heavy and uncontrollable vertical jerk of the empty container, until the forward edge reaches the ground, which can result in personal injury and material damage. It is quite clear that the greater the distance between the front wheels and the substructure is, the more serious will the consequences be in connection with uncontrolled manoeuvres of the vehicle.

The object of the present invention is to provide a towing vehicle of the kind mentioned in the introduction, allowing a very flexible adaption to varying shapes of the substructure, such as ramps of different slopes and configurations, so as to minimize dangerous consequences of uncontrolled manoeuvres of the vehicles.

According to the invention this has been achieved in that the coupling means is carried raisable and lowerable relative to the vehicle frame by separate carrying means which are adjustable in height with the aid of hydraulic cylinders acting between said carrying means and the frame, said lifting means being arranged to allow lifting of the front wheels to a level over the substructure independent from the level on which said coupling means is carried by said carrying means, so as to allow adjustment of said level of the front wheels over the substructure as the shape of the substructure varies, independently of the desired level of said coupling means.

By the invention the front wheels can always be set at such a low level over the substructure that the risks in connection with uncontrolled manoeuvres of the vehicles are minimized.

US—B—2 936 037 as well as SE—C—148 620 disclose vehicles that can be generally defined as in the introductory paragraph above. They have, however, no means whatsoever for varying the height over the substructure of the coupling means used to interconnect the vehicle frame and the object to be towed. This means that they suffer from the same problem as has been dealt with above in connection with SE—B—412 571.

SE—B—357 721 discloses, per se, a coupling means on a towing vehicle carried by the vehicle frame and implemented to provide a substantially rigid interconnection of the vehicle frame and an object to be towed, said coupling means being raiseable and lowerable with respect to the substructure. This prior art vehicle, however, is not a vehicle of the type in which the front wheels can be lifted from the substructure when the coupling means is in engagement with and carries the object to be towed.

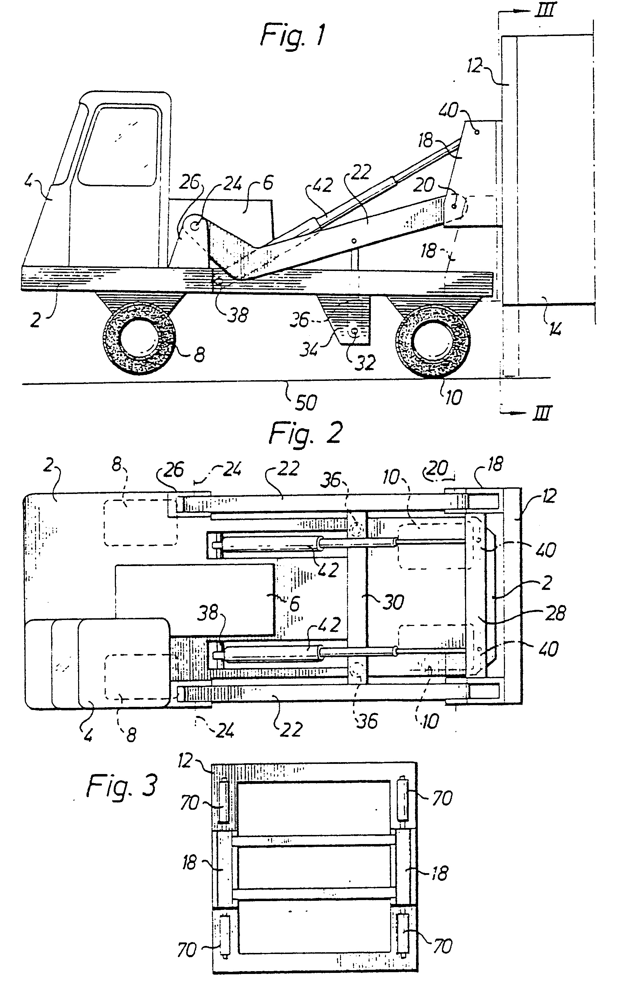

The invention will now be described more closely with reference to the appended drawings, whereon Figures 1 and 2 schematically illustrate in plan view and side view a towing vehicle in accordance with the invention, and Figure 3 in a view in the direction of arrows III—III in Figure 1, schematically illustrates a means for enabling taking up mutual torque stresses vertically between the vehicle and container.

The vehicle on the drawings has a rigid frame 2 carrying a driver's cabin 4 and a driving engine unit 6. The vehicle has front wheels 8 and rear wheels 10. In a manner not disclosed, but known per se, the rear wheels 10 are steerable and drivably connected to the driving unit 6.

To the rear, the vehicle carries a coupling means in the form of a rectangular frame 12 with coupling members for a container, trailer etc. 14, which is to be moved with the aid of the vehicle and which is carried by wheels at its end not visible in Figure 1. More specifically, the coupling members may be adapted for attaching the frame 12 to the corner fittings of the container etc. in a conventional manner.

The frame 12 is carried by two U-sectioned brackets 18, which in turn, between their legs, are pivotably carried at 20 by each a side beam 22. Between the forward ends the side beams 22 are pivotably mounted at 24 in mountings 26 carried by the vehicle frame 2. The brackets 18 are joined together by a cross-beam 28 and the side beam 22 by a cross beam 30. Between pivot attachements 32 located low in brackets 34 connected to the frame 2 and pivot attachments at the cross beam 30 two hydraulic lifting cylinders 36 act. By means of the lifting cylinders 36, the side beams 22 may be lifted from a position substantially on level with the frame 2 to the position illustrated in Figure 1, by pivoting around the pivots 24.

Two hydraulic rams 42 act between lower pivot attachment 38 in the frame 2 and pivot attachments 40 carried by the cross beam 28. More specifically, the brackets 18 and thereby the frame 12 can be forced to assume different angular positions relative the side beams 22 by means of the hydraulic cylinders 42.

The described arrangement with the members 22, 42, 18 and 36 is preferably implemented and arranged such that there is also space for a fifth wheel on the frame and for coupling a semitrailer when said members are not in use.

The frame 12 and brackets 18 are attached to each other while permitting mutual rotating movement in the plane of the frame 12. This rotational movement is counteracted by four damping cylinders 70. This arrangement permits mutual rotation in case of great loads the wheel pair of the vehicle is vertically rotated in relation to the rear wheels of the container. Alternatively, said rotational movement may be taken up between the vehicle frame and the rear axle.

For coupling the described towing vehicle to a container etc. resting on the substructure 50 the following measures are taken. The vehicle is backed towards the end wall of the container 14 with the brackets 18 and frame 12 in the position illustrated by dashed lines in Figure 1. Coupling the frame 12 to the container 14 may be performed conventionally. Thereupon the forward end of the container etc. 14 is lifted up by operating the hydraulic cylinders 36. The container 14 is thus now carried at its forward end by the frame 12 and at its rear end by said wheels. The front end of the vehicle is subsequently lifted by pulling the hydraulic cylinders 42 to the position illustrated in Fig. 1, such that the front wheels 8 are clear from the substructure 50. The towing vehicle can now be used for transporting the container 14, the back wheels 10 then serving as driving and steering wheels.

By lifting the load in the described manner with the coupling means 12, 18 itself, there are avoided the problems connected with lifting a very heavy load a comparatively large distance by raising the vehicle frame with respect to its rear axle.

The front wheels of the vehicle are always kept sufficiently clear from the substructure 50 to allow said steering and driving functions of the rear wheels. This means that if the vehicle and the container are to travel up a ramp after having travelled on a substantially horizontal substructure, the front end of the vehicle may need to be raised still more by the hydraulic cylinders 42 to keep the front wheels clear from the ramp at the beginning. With the aid of the hydraulic cylinders 36 and 42 a very far-reaching adaption to different slopes and configurations of ramps can be attained without the risk of the goods container 14 or the front wheels 18 being brought into contact with any part of the ramp. For example, if the vehicle and the container are to pass a hump on a ramp it may be necessary for avoiding contact between the container and the hump, to raise the front end of the container, primarily with the aid of the cylinders 36, with simultaneous adjustment by means of the cylinders 42.

**Claims**

1. Towing vehicle with a front axle and a rear axle, the wheels (10) of the latter being steerable and drivably connected to the driving means (6) of the vehicle, a coupling means (12) carried by the vehicle frame (2) and implemented to provide a substantially rigid interconnection of the vehicle frame (2) and an object (14) to be towed, and a lifting means (42) adapted to allow lifting the front wheels (8) from the substructure (50) when the coupling means (12) is in engagement with said object (14), characterized in that the coupling means (12) is carried raisable and lowerable relative to the vehicle frame by separate carrying means (22) which are adjustable in height with the aid of hydraulic cylinders (36) acting between said carrying means and the frame (2), said lifting means (42) being arranged to allow lifting of the front wheels to a level over the substructure independent from the level on which said coupling means (12) is carried by said carrying means (22), so as to allow adjustment of said level of the front wheels over the substructure as the shape of the substructure varies, independently of the desired level of said coupling means (12).

2. Vehicle as claimed in claim 1, characterized in that the lifting means comprises pulling cylinders (42) acting between the coupling means (12) and the vehicle frame (2) at a forward portion of the vehicle.

3. Vehicle as claimed in claim 1 or 2, characterized in that the coupling means (12) is carried vertically pivotable at the rear end of carrying beams (22), the forward ends of which are pivotably carried at a forward point of the vehicle, and which are adjustable in height with the aid of hydraulic cylinders (36) acting between them and the frame (2), the point of action (40) of the pulling cylinders (42) at the coupling means being above the pivot axes (20) at the rear end of the carrying beams.

4. Vehicle as claimed in any of the preceding claims, characterized by a flexible attachment means (70) allowing relative rotation between vehicle and towed object in case of large loads, about an axis extending substantially parallel to the longitudinal direction of the vehicle.

**Revendications**

1. Véhicule de remorquage comportant un essieu avant et un essieu arrière, les roues (10) de l'essieu arrière étant orientables et reliées de façon à être entraînées par les moyens moteurs (6) du véhicule, des moyens (12) d'accouplement portés par le châssis (2) du véhicule et conçus pour assurer une liaison sensiblement rigide entre le châssis (2) du véhicule et un objet (14) devant être remorqué, et des moyens (42) élévateurs permettant de soulever les roues avant (8) du sol (50) lorsque les moyens d'accouplement (12) sont engagés avec ledit objet (14), ledit véhicule étant caractérisé en ce que les moyens d'accouplement (12) sont montés de façon à pouvoir être soulevés et abaissés par rapport au châssis du véhicule grâce à des moyens (22) séparés de montage qui sont réglables en hauteur au moyen de vérins hydrauliques (36) agissant entre lesdits moyens de montage et le châssis (2), lesdits moyens élévateurs (42) étant disposés de façon à permettre le soulèvement des roues avant jusqu'à un niveau situé au-dessus du sol indépendant du niveau auquel lesdits moyens d'accouplement (12) sont supportés par lesdits moyens de montage (22), de façon à permettre le réglage dudit niveau des roues avant au-dessus du sol en fonction des configurations diverses du sol, indépendamment du niveau désiré desdits moyens d'accouplement (12).

2. Véhicule selon la revendication 1, caractérisé en ce que lesdits moyens élévateurs comprennent des vérins de traction (42) agissant entre lesdits moyens d'accouplement (12) et le châssis du véhicule sur une partie avant du véhicule.

3. Véhicule selon la revendication 1 ou la revendication 2 caractérisé en ce que les moyens d'accouplement (12) sont montés de façon à pouvoir pivoter verticalement à l'extrémité arrière de poutres supports (22), dont les extrémités avant sont montées articulées en un point avant du véhicule, lesdites poutres étant réglables en hauteur au moyen de vérins hydrauliques (36) agissant entre elles et le châssis (2), le point d'action (40) des vérins de traction (42) sur les moyens d'accouplement étant situés au-dessus des axes (20) de pivotement à l'extrémité arrière des poutres supports.

4. Véhicule selon l'une quelconque des revendications précédentes caractérisé par des moyens (70) de fixation souple permettant une rotation relative entre le véhicule et l'objet remorqué dans le cas de charges importantes, autour d'un axe s'étendant sensiblement parallèlement à la direction longitudinale du véhicule.

**Patentansprüche**

1. Zugfahrzeug mit einer Vorderachse und einer Hinterachse, deren Räder (10) lenkbar und antreibbar mit der Antriebseinrichtung (6) des Fahrzeugs verbunden sind, einer von dem Fahrzeugrahmen (2) getragenen Kupplungseinrichtung (12), die derart ausgebildet ist, daß sie eine im wesentlichen starre Verbindung des Fahrzeugrahmens (2) mit einem zu ziehenden Gegenstand (14) gewährleistet, und einer Hubvorrichtung (42), die ein Anheben der Vorderräder (8) von dem Untergrund (50) ermöglicht, wenn die Kupplungseinrichtung (12) in Eingriff mit dem Gegenstand (14) steht, dadurch gekennzeichnet, daß die Kupplungseinrichtung (12) durch eine eigene Trägeranordnung (22) relativ zum Fahrzeugrahmen anhebbar und absenkbar gehalten ist, wobei die Trägeranordnung (22) mit Hilfe von zwischen der Trägeranordnung und dem Rahmen (2) wirkenden Hydraulikzylindern (36) in der Höhe einstellbar ist, und daß die Hubeinrichtung (42) so ausgebildet ist, daß sie das Anheben der Vorderräder bis auf eine Höhenlage über dem Untergrund erlaubt, die unabhängig von der Höhenlage ist, auf der die Kupplungsvorrichtung (12) durch die Trägeranordnung (22) gehalten ist, so daß die Höhenlage der Vorderräder über dem Untergrund entsprechend der Änderung der Form des Untergrundes unabhängig von der gewünschten Höhenlage der Kupplungseinrichtung (12) eingestellt werden kann.

2. Fahrzeug nach Anspruch 1, dadurch gekennzeichnet, daß die Hubeinrichtung zwei Zugzylinder (42) umfaßt, die an der Kupplungseinrichtung (12) und an dem Fahrzeugrahmen (2) in einem vorderen Abschnitt des Fahrzeugs angreift.

3. Fahrzeug nach Anspruch 1 oder 2, dadurch gekennzeichnet, daß die Kupplungseinrichtung (12) vertikal schwenkbar an den rückwärtigen Enden von Trägern (22) gehalten ist, deren vordere Enden an einer vorderen Stelle des Fahrzeugs angelenkt sind und die mit Hilfe von zwischen ihnen und dem Rahmen (2) wirkenden Hydraulikzylindern (36) höhenverstellbar sind, wobei der Angriffspunkt (40) der Zugzylinder (42) an der Kupplungseinrichtung oberhalb der Schwenkachsen (20) an den rückwärtigen Enden der Träger liegt.

4. Fahrzeug nach einem der vorhergehenden Ansprüche, gekennzeichnet durch flexible Befestigungsmittel (70), die im Falle schwerer Lasten eine Relativ-Drehbewegung zwischen dem Fahrzeug und dem gezogenen Gegenstand um eine im wesentlichen parallel zur Fahrzeuglängsrichtung gerichtete Achse ermöglichen.

*Fig. 1*

*Fig. 2*

*Fig. 3*

1